# EUROPEAN PATENT APPLICATION

(11) **EP 4 432 709 A1**
(43) Date of publication of application: **18.09.2024**
(21) Application number: 23747393.9
(22) Date of filing: 27.01.2023
(51) Int. Cl.: H04W 8/20, H04W 12/06, H04W 4/60

(54) **METHOD AND APPARATUS FOR AUTHENTICATING USER WHEN CHANGING DEVICES**

(30) Priority: 27.01.2022 KR 20220012147; 11.02.2022 KR 20220017884; 14.06.2022 KR 20220072427
(71) Applicant: Samsung Electronics Co., Ltd., Suwon-si, Gyeonggi-do 16677 (KR)
(72) Inventor: YOON, Kangjin, Suwon-si, Gyeonggi-do 16677 (KR); KANG, Sujung, Suwon-si, Gyeonggi-do 16677 (KR); LEE, Duckey, Suwon-si, Gyeonggi-do 16677 (KR)
(74) Representative: Gulde & Partner
(86) International application number: PCT/KR2023/001290
(87) International publication number: WO 2023/146352

(57) **Abstract**

The present disclosure relates to a 5G or 6G communication system for supporting higher data transmission rates. The present disclosure relates to a method and apparatus for re-installing a profile when changing an eUICC terminal. A method performed by a first terminal in a wireless communication system supporting device changes comprises the steps of: transmitting, to a profile server, a device change request message for a device change for a profile of the first terminal; receiving, from the profile server, a device change request response message including a confirmation code requirement indicator for the device change; confirming, on the basis of the confirmation code requirement indicator for the device change, the reception of a confirmation code input; generating confirmation code hash information on the basis of the confirmation code; and transmitting, to the profile server, a device change confirmation message including the confirmation code hash information.

## Description

### [Technical Field]

The disclosure relates to a method and an apparatus for installing and managing an eUICC profile.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to effectively provide these services.

The "universal integrated circuit card (UICC)" is a smart card inserted into a mobile communication terminal to be used and is also called a UICC card. The UICC may include an access control module through which a terminal accesses a network of a mobile communication service provider. The access control module may include, for example, a universal subscriber identity module (USIM), a subscriber identity module (SIM), and an IP multimedia service identity module (ISIM). A UICC including a USIM is generally called a USIM card. Similarly, a UICC including a SIM module is generally called a SIM card.

Among UICC cards, a UICC which is fixed to the terminal and used is referred to as an embedded UICC (eUICC). In general, the eUICC is a UICC which is fixed to the terminal to be used and can remotely download and select a SIM module. Further, downloaded SIM module information is called an eUICC profile or, more simply, a profile.

### [Disclosure of Invention]

### [Technical Problem]

An embodiment of the disclosure provides a method and an apparatus for effectively providing a service in a mobile communication system.

According to an embodiment of the disclosure, an aspect of the disclosure is to provide a method and an apparatus in which a terminal selects a communication service and making a connection to a network in a communication system.

According to another embodiment of the disclosure, another aspect of the disclosure is to provide a method and an apparatus in which a terminal downloads, installs, and manages a profile for making a connection to a network online in a communication system.

According to another embodiment of the disclosure, another aspect of the disclosure is to provide a method and an apparatus in which the terminal can efficiently download again the profile installed to make the connection to the network to another terminal in a communication system.

The technical subjects pursued in the disclosure may not be limited to the above - mentioned technical subjects, and other technical subjects which are not mentioned may be clearly understood, through the following descriptions, by those skilled in the art to which the disclosure pertains.

### [Solution to Problem]

In accordance with the disclosure to solve the problems, a method performed by a first terminal in a wireless communication system supporting a device change includes transmitting a device change request message for a device change for a profile of a first terminal to a profile server, receiving a device change request response message including a confirmation code required indicator for the device change from the profile server, identifying reception of an input of a confirmation code, based on the confirmation code required indicator for the device change, generating confirmation code hash information, based on the confirmation code, and transmitting a device change confirmation message including the confirmation code hash information to the profile server.

In accordance with the disclosure to solve the problems, a method performed by a profile server in a wireless communication system supporting a device change includes receiving a device change request message for a device change for a profile of a first terminal from the first terminal, receiving a confirmation code from a service provider, transmitting a device change request response message including a confirmation code required indicator for the device change to the first terminal, based on the confirmation code, receiving a device change confirmation message including confirmation code hash information from the first terminal, and determining a result of a device change request, based on the received confirmation code hash information.

In accordance with the disclosure to solve the problems, a first terminal in a wireless communication system supporting a device change includes a transceiver configured to transmit and receive signals and
a controller connected to the transceiver, wherein the controller is configured to transmit a device change request message for a device change for a profile of the first terminal to a profile server, receive a device change request response message including a confirmation code required indicator for the device change from the profile server, identify reception of an input of a confirmation code, based on the confirmation code required indicator for the device change, generate confirmation code hash information, based on the confirmation code, and transmit a device change confirmation message including the confirmation code hash information to the profile server.

In accordance with the disclosure to solve the problems, a profile server in a wireless communication system supporting a device change includes a transceiver configured to transmit and receive signals and a controller connected to the transceiver, wherein the controller is configured to receive a device change request message for a device change for a profile of a first terminal from the first terminal, receive a confirmation code from a service provider, transmit a device change request response message including a confirmation code required indicator for the device change to the first terminal, based on the confirmation code, receive a device change confirmation message including confirmation code hash information from the first terminal, and determine a result of a device change request, based on the received confirmation code hash information. In accordance with the disclosure to solve the problems, a method of processing control signals in a wireless communication includes receiving a first control signal transmitted from a base station; processing the received first control signal; and transmitting, to the base station, a second control signal generated based on the processing.

### [Advantageous Effects of Invention]

According to an embodiment of the disclosure, a service can be effectively provided in a mobile communication system.

According to an embodiment of the disclosure, when a terminal desires to install a profile, which is installed in the terminal, in another terminal in a communication system, the terminal may be issued an activation code required for reinstalling the profile from a profile server or may receive a profile movement request result from the profile server. A confirmation number of character string for user authentication may be further transmitted to the profile server when there is a profile movement request if necessary, the profile to be moved may be first deleted if necessary, profile deletion evidence that can verify deletion of the profile may be transferred to a server, an activation code or a profile movement result may be transferred to another terminal, and the other terminal may be allowed to effectively download the profile from the profile server and install the profile.

According to another embodiment of the disclosure, the profile server can receive a request for reinstalling the profile, which was installed in the terminal, in another terminal from the terminal in a communication system. A request for identifying a profile can be moved may be transmitted to an operator if necessary, a request for a confirmation number or a character string for user authentication may be made to a terminal if necessary, a request for deleting the profile is made to the terminal if necessary, a request for transmitting profile deletion evidence may be made if necessary, the prepared profile may be configured as a state in which download is not possible if necessary, an activation code for downloading the prepared profile may be generated if necessary, the profile may be changed to a state in which download is possible when the terminal deletes the profile, and the profile may be safely downloaded through prevention of copying the profile and an error in the terminal.

Advantageous effects obtainable from the disclosure may not be limited to the above - mentioned effects, and other effects which are not mentioned may be clearly understood, through the following descriptions, by those skilled in the art to which the disclosure pertains.

### [Brief Description of Drawings]

FIG. 1 illustrates a method by which a terminal accesses a mobile communication network using a universal integrated circuit card (UICC) equipped with a fixed profile according to an embodiment of the disclosure.
FIG. 2 illustrates a configuration of a system in which a terminal manages a profile installed in a first terminal and installing a profile in a second terminal according to a user input according to an embodiment of the disclosure.
FIG. 3 illustrates an example of a procedure between a first terminal, a second terminal, and a server to allow the second terminal to download a profile according to an embodiment of the disclosure.
FIG. 4 is a block diagram illustrating elements of a terminal according to an embodiment of the disclosure.
FIG. 5 is a block diagram illustrating elements of a profile server according to an embodiment of the disclosure.

### [Mode for the Invention]

Hereinafter, embodiments of the disclosure will be described in detail in conjunction with the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

Particular terms as used in the following description are merely provided to help understanding pf the disclosure, and other types of terms may be used without departing from the scope of the technical idea of the disclosure.

In the disclosure, the "universal integrated circuit card (UICC)" is a smart card inserted into a mobile communication terminal to be used and is also called a UICC card.

The UICC is a chip that stores personal information such as network access authentication information of a mobile communication service provider, a phone number list, and SMS information, and performs subscriber authentication and traffic security key generation when a connection is made to a mobile communication network, such as GSM, WCDMA, LTE, or the like, thereby making it possible to stably use mobile communication.

The UICC may include a communication application or an access control module through which the terminal accesses a network of the mobile communication service provider. The communication application or the access control module may include, for example, a universal subscriber identity module (USIM), a subscriber identity module (SIM), and an IP multimedia service identity module (ISIM). Further, the UICC may provide a higher level security function for installing various applications such as an electronic wallet, ticketing, an electronic passport, or the like.

The UICC including the USIM is generally called a USIM card. Similarly, the UICC including the SIM module is generally called a SIM card.

In the disclosure, a "SIM card", a "UICC card", a "USIM card", and a "UICC including an ISIM" may have the same meaning. That is, the disclosure may be identically applied to a SIM card, a USIM card, an ISIM card, or a general UICC card.

The SIM card stores private information of a mobile communication subscriber, and authenticates the subscriber and generates a traffic security key during access to a mobile communication network, thereby making it possible to stably use the mobile communication.

In general, the SIM card is manufactured as a card dedicated for a particular mobile communication service provider according to a request of the corresponding service provider and is released with authentication information for network access of the corresponding service provider, for example, a universal subscriber identity module (USIM) application, an international mobile subscriber identity (IMSI), a K value, and an OPc value that are installed therein in advance. Accordingly, the corresponding mobile communication service provider receives delivery of the SIM card to provide it to the subscriber, and thereafter performs management, such as installation, modification, and deletion of an application in the UICC using technologies of over-the-air (OTA) as necessary. The subscriber can use a network and application service of the corresponding mobile communication service provider by inserting the UICC card into a mobile communication terminal of the subscriber. Further, after changing the terminal, the subscriber can still use authentication information, mobile communication phone numbers, and a personal phone book stored in the UICC card through a new terminal by inserting the UICC card of the conventional terminal into the new terminal.

However, the SIM card make the user of the mobile communication terminal feel inconvenience in receiving a service of another mobile communication service provider. The user of the mobile communication terminal is inconvenienced in physically acquiring the SIM card in order to receive the service from a mobile communication service provider. For example, when traveling to other countries, the user must obtain a local SIM card in order to receive a local mobile communication service, which inconveniences the user. Roaming service may resolve this inconvenience somewhat, but there are also problems of high fees and lack of service if there is no contract between mobile carriers.

Meanwhile, when the SIM module is remotely downloaded and installed in the UICC card, the inconvenience can be considerably resolved. That is, the user may download the SIM module of the mobile communication service that the user desires to use to the UICC card at a time point that the user desires. The UICC card may download and install a plurality of SIM modules, select only one SIM module among them, and use the selected SIM module. The UICC card may be or may not be fixed to the terminal. Particularly, the UICC which is fixed to the terminal and used is referred to as an embedded UICC (eUICC). In general, the eUICC is a UICC card which may be fixed to the terminal to be used and that remotely downloads and selects a SIM module. In the disclosure, a UICC card that can remotely download and select a SIM module is called an eUICC. That is, among UICC cards that can remotely download and select a SIM module, UICC cards are collectively called eUICCs, regardless of whether or not they are fixed to the terminal. Further, downloaded SIM module information is collectively called an eUICC profile or, more simply, a profile.

In the disclosure, an "embedded UICC eUICC" is a security module in the shape of a chip embedded in a terminal, but not a detachable module that can be inserted into and detached from a terminal. The eUICC may download and install a profile using over-the-air (OTA) technology. The eUICC may be referred to as a UICC capable of downloading and installing a profile.

In the disclosure, a method of downloading and installing an eUICC a profile using OTA technology may be applied to a detachable UICC that can be inserted into and detached from a terminal. That is, embodiments of the disclosure may be applied to a UICC capable of downloading and installing a profile using OTA technology.

In the disclosure, a "UICC" may be used interchangeably with a "SIM", and an "eUICC" may be used interchangeably with an "eSIM".

In the disclosure, a "profile" may mean a package of an application, a file system, an authentication key, etc. stored in the UICC in a software format.

In the disclosure, a "USIM profile" may have the same meaning as a "profile", or may mean a package of information incorporated in a USIM application in a profile in a software format.

In the disclosure, an operation in which the terminal enables a profile may be an operation of changing the state of the corresponding profile into an enabled state and allowing the terminal to receive a communication service through a communication service provider providing the corresponding profile. The profile in the enabled state may be expressed as an "enabled profile".

In the disclosure, an operation in which the terminal disables a profile may be an operation of changing the state of the corresponding profile into a disabled state and preventing the terminal from receiving a communication service through a communication service provider providing the corresponding profile. The profile in the disabled state may be expressed as a "disabled profile".

In the disclosure, an operation in which the terminal deletes a profile may be an operation of changing the state of the corresponding profile into a deleted state and preventing the terminal from enabling or disabling the corresponding profile any more. The profile in the deleted state may be expressed as a "deleted profile".

In the disclosure, an operation in which the terminal enables, disables, or deletes a profile may be an operation of first making the state of each profile as a state to be enabled, a state to be disabled, or a state to be deleted without immediately changing the state of each profile into an enabled state, a disabled state, or a deleted state, performing a specific operation (for example, a REFRESH or RESET command) by the terminal or the UICC of the terminal, and then changing the state of each profile into the enabled state, the disabled state, or the deleted state. The operation of marking a specific profile as a state to be changed (that is, a state to be enabled, a state to be disabled, or a state to be deleted) does not have be limited to marking one profile as one state to be changed, and one or more profiles may be marked as the same or different states to be changed, one profile may be marked as one or more states to be changed, or one or more profiles may be marked as the same or one or more different states to be changed.

When the terminal marks one or more states to be changed for a predetermined profile, marking of two states to be changed may be integrated into one state. For example, when a predetermined profile is marked as the state to be disabled and the state to be deleted, the corresponding profile may be marked as a state to be disabled and deleted.

Further, operations in which the terminal displays states to be changed for one or more profiles may be performed sequentially or simultaneously. In addition, operations in which the terminal displays states to be changed for one or more profiles and then actually changes the states of the profiles may be performed sequentially or simultaneously.

In the disclosure, a "profile provision server" may include functions of generating a profile, encrypting the generated profile, generating a profile remote management command, or encrypting the generated profile remote management command. The profile provision server may be expressed as subscription manager data preparation (SM-DP), subscription manager data preparation plus (SM-DP+), an off-card entity of profile domain, a profile encryption server, a profile generation server, a profile server, a profile provisioner (PP), a profile provider, or a profile provisioning credentials (PPC) holder.

In the disclosure, a "profile management server" may include functions of managing profiles. The profile management server may be expressed as subscription manager secure routing (SM-SR), subscription manager secure routing plus (SM-SR+), an off-card entity of eUICC profile manager, a profile management credentials (PMC) holder, an eUICC manager (EM), or a profile manager (PP).

In the disclosure, the profile provision server may be an entity that also has the functions of the profile management server. Accordingly, in various embodiments of the disclosure, the operation of the profile provision server may be performed by the profile management server. Similarly, the operation of the profile management server or the SM-SR may be performed by the profile provision server.

In the disclosure, the "subscription relay server" may be expressed as a subscription manager discovery service (SM-DS), a discovery service (DS), a root SM-DS, or an alternative SM-DS. The subscription relay server may receive an event registration request (Register Event Request or Event Register Request) from one or more profile provision servers or subscription relay servers. Further, one or more subscription relay servers may be used together, in which case a first subscription relay server may receive an event registration request not only from the profile provision server but also from a second subscription relay server.

In the disclosure, the profile provision server and the subscription relay server may be collectively called a "remote SIM provisioning (RSP) server". The RSP server may be expressed as subscription manager (SM)-XX.

In the disclosure, the 'terminal' may be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a moving node, a mobile device, or other terms. In an embodiment, the terminal may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a home appliance that has a wireless communication function for storing and reproducing music, an Internet home appliance capable of performing wireless Internet access and browsing, and portable units or terminals having integrated combinations of the functions thereof. Furthermore, the terminal may include, but is not limited to, a machine-to-machine (M2M) terminal and a machine-type communication (MTC) terminal/device. In the disclosure, the terminal may be referred to as an electronic device.

In the disclosure, an "electronic device" may have a UICC capable of downloading and installing a profile. When the UICC is not embedded into the electronic device, the UICC physically separated from the electronic device may be inserted into the electronic device and connected thereto. For example, the UICC may be inserted into the electronic device in a card form. The electronic device may include a terminal and, at this time, the terminal may be a terminal including a UICC which can download and install a profile. The UICC may be embedded into the terminal, and also be inserted into the terminal when the terminal and the UICC are separated from each other, and the inserted UICC may be connected to the terminal. The UICC capable of downloading and installing the profile may be referred to as, for example, an eUICC.

In the disclosure, the terminal or the electronic device may include software or an application installed in the terminal or the electronic device to control the UICC or the eUICC. The software or the application installed in the terminal or the electronic device to control the UICC or the eUICC may be referred to as, for example, a local profile assistant (LPA).

In the disclosure, a "profile identifier" may be referred to as a factor that matches a profile ID, an integrated circuit card id (ICCID), a matching ID, an event ID, an activation code, an activation code token, a command code, a command code token, a signed command code, an unsigned command code, an ISD-P, or profile domain (PD). The profile ID may indicate a unique identifier of each profile. The profile identifier may further include an address of a profile provision server (SM-DP+) for indexing the profile. The profile identifier may further include a signature of the profile provision server (SM-DP+).

In the disclosure, an "eUICC ID" may be a unique identifier of the eUICC embedded into the terminal, and may be referred to as an EID. Further, when a provisioning profile is preinstalled in the eUICC, an eUICC ID may be an identifier of the corresponding provisioning profile (profile ID). Further, in an embodiment of the disclosure, when the terminal and the eUICC chip are not separated from each other, the eUICC ID may be a terminal ID. In addition, the eUICC ID may refer to a specific secure domain of the eUICC chip.

In the disclosure, a "profile container" may be named a profile domain. The profile container may be a security domain.

In the disclosure, an "application protocol data unit (APDU)" may be a message by which the terminal is linked to the eUICC. Further, the APDU may be message by which a profile provider (PP) or a profile manager (PM) is linked to the eUICC.

In the disclosure, "profile provisioning credentials (PPC)" may be a means used for performing mutual authentication between the profile provision server and the eUICC, encrypting a profile, and signing. The PPC may include one or more of a symmetric key, a Rivest-Shamir-Adleman (RSA) authentication certificate and a private key, an elliptic curved cryptography (ECC) authentication certificate and a private key, and a root certification authority (CA) and an authentication certificate chain. Further, when the number of profile provision servers is plural, different PPCs for the plurality of respective profile provision servers may be stored in the eUICC and used.

In the disclosure, "profile management credentials (PMC)" may be a means used for performing mutual authentication between the profile management server and the eUICC, encrypting a profile, and signing. The PMC may include one or more of a symmetric key, an RSA authentication certificate and a private key, an ECC authentication certificate and a private key, and a root CA and an authentication certificate chain. Further, when the number of profile management servers is plural, different PMCs for the plurality of respective profile management servers may be stored in the eUICC and used.

In the disclosure, an "AID" may be an application identifier. This value may be an identifier for identifying different applications within the eUICC.

In the disclosure, an "event" may be a term that collectively indicates profile download, remote profile management, or management/processing instructions of other profiles or the eUICC. The event may be named remote SIM provision operation (remote SIM provisioning operation or RSP operation), or event record, and each event may be referred to as data including one or more of an event identifier (event ID or EventID) corresponding thereto, a matching identifier (matching ID or MatchingID), and an address (FQDN, IP address, or URL) of the profile provision server (SM-DP+) or the subscription relay server (SM-DS) storing the corresponding event, signature of the profile provision server (SM-DP+) or the subscription relay server (SM-DS), or a digital certificate of the profile provision server (SM-DP+) or the subscription relay server (SM-DS).

Data corresponding to the event may be referred to as a "command code". Some or all of the procedure using the command code may be referred to as a "command code processing procedure", a "command code procedure", or a "local profile assistant application programming interface (LPA API)". The profile download may be interchangeably used with "profile installation".

An "event type" may be used as a term indicating whether a particular event is profile download, remote profile management (for example, delete, enable, disable, change, update, or the like), or may indicate a management/processing command of another profile or the eUICC, and may be named operation type (OperationType), operation class (OperationClass), event request type, event class, or event request class. With respect to a predetermined event identifier (EventID or MatchingID), a path through which the terminal acquires the corresponding event identifier (EventID or MatchingID) or the use thereof (EventID Source or MatchingID Source) may be designated.

In the disclosure, a "profile package" may be interchangeably used with "profile" or may be used as a term indicating a data object of a particular profile, and may be named a profile TLV or a profile package TLV. When the profile package is encrypted using an encryption parameter, the profile package may be a protected profile package (PPP) or a protected profile package TLV (PPP TLV). When the profile package is encrypted using an encryption parameter that can be decrypted by only a particular eUICC, the profile package may be a bound profile package (BPP) or a bound profile package (BPP) TLV. The profile package TLV may be a data set indicating information which configures a profile in a tag, length, and value (TLV) format.

In the disclosure, "local profile management (LBM)" may be named profile local management, local management, a local management command, a local command, a local profile management (LPM) package, a profile local management package, a local management package, a local management command package, or a local command package. The LPM may be used for changing the state of a particular profile (enabled, disabled, or deleted) through software installed in the terminal or updating the content of a particular profile (for example, a profile nickname or profile abstract information (profile metadata or the like). The LPM may include one or more local management commands in which case profiles subject to the local management commands may be the same or different according to the local management command.

In the disclosure, "remote profile management (RPM)" may be named profile remote management, remote management, a remote management command, a remote command, an RPM package, a profile remote management package, a remote management package, a remote management command package, or a remote command package. The RPM may be used to change the state of a particular profile (enabled, disabled, or deleted) or to change (update) the content of a particular profile (for example, a profile nickname or profile abstract information (profile metadata). The RPM may include one or more remote management commands, in which case the profiles pertaining to each remote management command may be the same as or different from each other according to the remote management command.

In the disclosure, a "certificate" or a "digital certificate" may be a digital certificate used for mutual authentication based on an asymmetric key consisting of a pair of a public key (PK) and a secret key (SK). Each certificate may include one or more public keys (PKs), public key identifiers (PKIDs) corresponding to the respective PKs, an ID of a certificate issuer (CI) that issues the corresponding certificate, and digital signature.

Further, the "certificate issuer" may be named a certification issuer, certificate authority (CA), or certification authority.

In the disclosure, the "public key (PK)" and the "public key identifier (PKID)" may be interchangeably used to indicate a particular public key, a certificate including the corresponding public key, part of the particular public key, part of the certificate including the corresponding public key, the value of a calculation result (for example, a hash) of the particular public key, the value of a calculation result (for example, hash) of the certificate including the corresponding public key, the value of a calculation result (for example, a hash) of the part of the particular public key, the value of a calculation result (for example, a hash) of the part of the certificate including the corresponding public key, or a storage space storing the data.

In the disclosure, when certificates (primary certificates) issued by one certificate issuer are used for issuing other certificates (secondary certificates) or when secondary certificates are used for successively issuing tertiary or higher certificates, the relationship between the corresponding certificates may be named a certificate chain or a certificate hierarchy. At this time, a CI certificate used for issuing a first certificate may be referred to as a root certificate, highest certificate, root CI, root CI certificate, root CA, or root CA certificate.

In the disclosure, a "communication service provider (mobile operator)" may indicate a company providing a communication service to the terminal, and may include all of a business supporting system (BSS), an operational supporting system (OSS), a point of sale (POS) terminal, and other IT systems of the mobile operator. In the disclosure, the mobile operator is not limited to express only one specific company providing the communication service, and may be used to refer to a group or an association (or consortium) of one or more companies or a representative representing the corresponding group or association. Further, in the disclosure, the mobile operator (OP or Op) may be named an operator (OP or Op), a mobile network operator (MNO), a mobile virtual network operator (MVNO), a service provider (or SP), or a profile owner (PO), and each mobile operator may configure or receive allocation of at least one of a name and/or a unique identifier (object identifier (OID)) of the mobile operator. When the mobile operator refers to a group or an association of one or more companies or a representative, a predetermined group, association, name of representative, or unique identifier may be a name or a unique identifier shared by all companies belonging to the corresponding group or association or all companies cooperating with the corresponding representative.

In the disclosure, the "AKA" may indicate authentication and key agreement, and corresponds to an authentication algorithm for accessing 3GPP and 3GPP2 networks.

In the disclosure, "K" is an encryption key value stored in the eUICC used for an AKA authentication algorithm.

In the disclosure, "OPc" is a parameter value which may be stored in the eUICC used for the AKA authentication algorithm.

In the disclosure, "NAA: is a network access application and may be an application such as a USIM or an ISIM stored in the UICC to access the network. The NAA may be a network access module.

In the disclosure, an "indicator" may be used to express that a predetermined function, configuration, or operation is or is not needed, or used to express the corresponding function, configuration, or operation itself. Further, in the disclosure, the indicator may be expressed in various forms such as a character string, an alphanumeric string, an operator indicating true/false (Boolean - TRUE or FALSE), a bitmap, an array, a flag, and the like, and other expressions having the same meaning may be interchangeably used.

A terminal configured to manage a profile for making a connection to a network using an embedded universal integrated circuit card (eUICC) in a wireless communication system according to an embodiment of the disclosure may include a transceiver and at least one processor configured to control the terminal to receive an input of the profile from a user, identify profile movement information, transmit a message making a request for moving a profile to a profile server, further transmit a confirmation number or a character string for user authentication to the profile server if necessary, receive an activation code or whether an event is registered or whether deletion of the profile is needed from the profile server, delete the profile, transmit a profile deletion result to the profile server, transfer the activation code or a profile movement request result to another terminal, receive the activation code or the profile movement request result from the other terminal, transmit a message making a request for the profile to the profile server by using the activation code, receive a profile package from the profile server, and install the profile package.

A profile server configured to provide a profile for making a connection to a network to a terminal in a wireless communication system according to an embodiment may include a transceiver and at least one processor configured to control the profile server to receive a profile movement request message from the terminal, further receive a confirmation number or a character string for user authentication from the terminal if necessary, determine whether the profile can be moved, generate an activation code for downloading the profile or a new profile, configure the prepared profile to be in a state in which download is not possible after the profile is deleted from the terminal, transmit the activation code and whether deletion of the profile is needed to the terminal, receive a profile deletion result from the terminal, change the profile to a state in which download is possible, receive a profile download request message from the terminal, determine whether the profile is in the state in which download is possible, transmit a profile package to the terminal when the profile can be downloaded, transmit an error code when the profile cannot be downloaded, verify a profile deletion result included in the profile download request, and transmit an error code when the profile deletion result does not exist or verification failed.

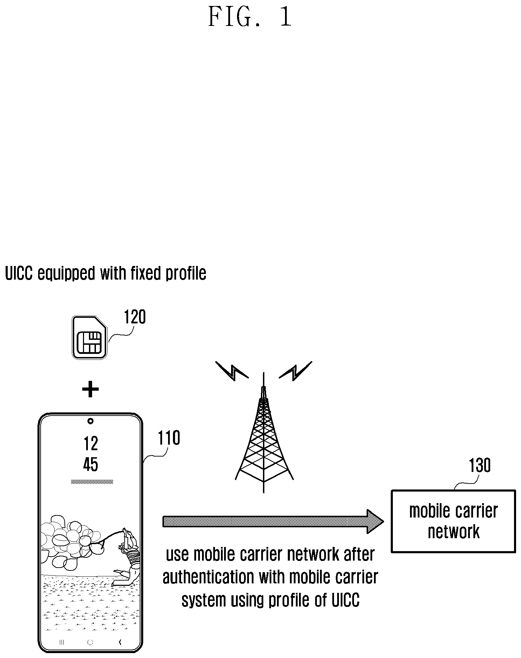

Hereinafter, a method and an apparatus for installing and managing a profile according to the disclosure are described with reference to FIGs. 1 to 5.

FIG. 1 illustrates a mobile communication network connection method of a terminal using a UICC having a profile fixed to the terminal according to an embodiment of the disclosure.

As illustrated in FIG. 1, a UICC 120 may be inserted into a terminal 110. For example, the UICC 120 may be removable, or may be embedded into the terminal in advance.

The fixed profile of the UICC 120 having the fixed profile means that "access information" for access to a specific mobile carrier is fixed. For example, access information may be an IMSI, which is a subscriber identifier, or K or Ki required for authenticating a network together with the subscriber identifier.

The terminal 110 according to various embodiments may perform authentication with an authentication processing system (for example, a home location register (HLR)) of a mobile communication service provider through the UICC 120. For example, an authentication process may be an authentication and key agreement (AKA) process. When the authentication is successful, the terminal 110 may use a mobile communication service such as the use of a phone or mobile data through a mobile carrier network 130 of the mobile communication system.

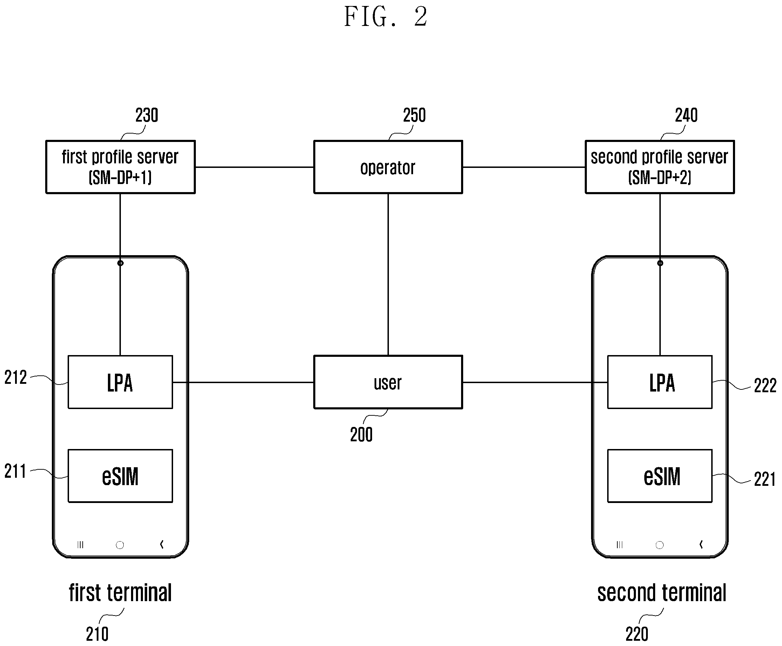

FIG. 2 illustrates a configuration of a system in which a terminal manages a profile installed in a first terminal and installing a profile in a second terminal according to a user input according to an embodiment of the disclosure.

As illustrated in FIG. 2, eSIMs 211 and 221 may be installed in terminals 210 and 220, and profiles (not shown) may be installed in the eSIMs 211 and 221. Further, LPAs 212 and 222 may be installed in the terminals 210 and 220. The eSIMs 211 and 221 may be controlled by the LPAs 212 and 222. A user 200 may control the profiles installed in the eSIMs 211 and 221 of the respective terminals through the LPAs 212 and 222.

The user 200 may receive a communication service from a service provider 250 (hereinafter, referred to as a "mobile operator" or an "operator"). To this end, a profile (not shown) of the operator 250 may be installed in the first terminal 210. For example, when the user 200 newly purchases the second terminal 220, the user 200 may attempt to install the profile installed in the first terminal 210 in the second terminal 220.

The operator 250 may be connected to a first profile server 230 and a second profile server 240, the LPA 212 of the first terminal 210 may be connected to the first profile server 230, and the LPA 222 of the second terminal 220 may be connected to the second profile server 240. At this time, the first profile server 230 and the second profile server 240 may be the same as or different from each other. Further, when one or more operator servers are included in the configuration, each operator server may be connected to each of separate profile servers or may be connected to the same profile server. Further, although FIG. 2 illustrates the case where each of the profile servers 230 and 240 is configured as a single server, one or more profile servers (SM-DP+) may be included in the server configuration according to implementation and embodiments. As described above, it should be noted that various server configurations may be simply expressed as a single profile server.

Detailed operations and message exchange procedures of the user 200, the operator 250, the terminals 210 and 220, the eSIMs 211 and 221, the LPAs 212 and 222, and the profile servers 230 and 240 are described in detail with reference to the following drawings.

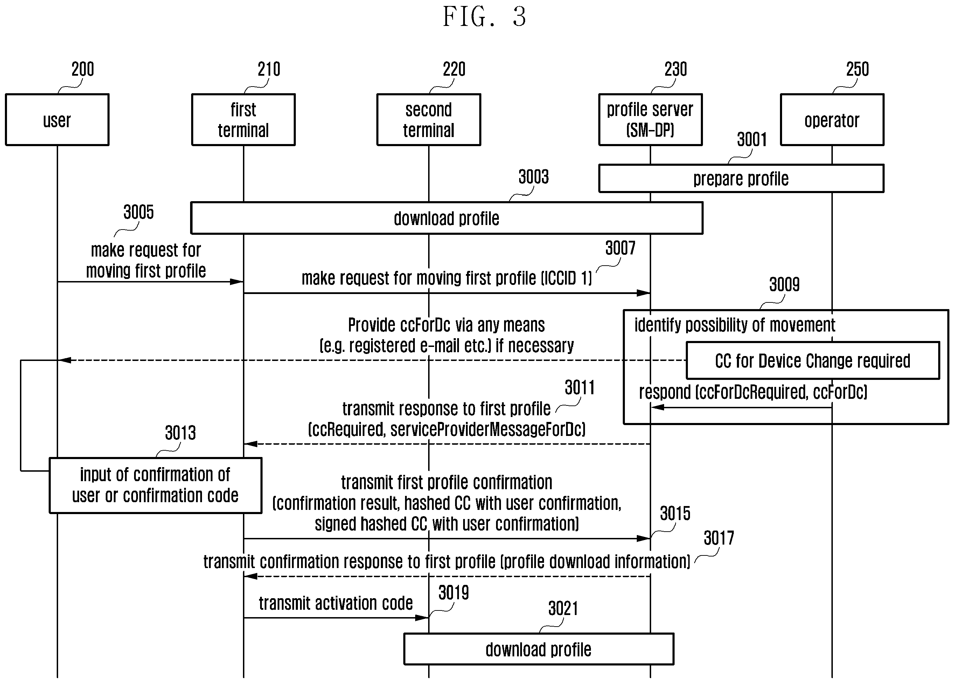

FIG. 3 illustrates an example of a procedure between a first terminal, a second terminal, and a server to allow the second terminal to download a profile according to an embodiment of the disclosure.

That is, FIG. 3 illustrates a procedure in which the first terminal makes a request for changing the installed profile, that is, for a device change to the second terminal through the profile server, the profile server makes a request for a confirmation code, that is, a profile movement confirmation code (confirmation code or confirmation code for device change) for profile movement to the first terminal, verifies a profile movement confirmation code transmitted by the first terminal, and then prepares a profile prepared for the second terminal, and the second terminal downloads the profile prepared for profile movement from the profile server.

In FIG. 3, a configuration and description for the user 200, the first terminal 210, the second terminal 220, the profile server 230, and the operator 250 is made with reference to FIG. 2. For example, the user 200, the first terminal 210, the second terminal 220, the profile server 230, and the operator 250 may correspond to the user 200, the first terminal 210, the second terminal 220, the profile server 230, and the operator 250 in FIG. 2, respectively.

Referring to FIG. 3, in operation 3001, the operator 250 may make a request for preparing a profile for the first terminal 210 to the profile server 230. For example, for the request for preparing the profile, the operator 250 may sign a contract for a service to be provided to the corresponding profile with the user 200. The user 200 may select a service provided by the operator 250 through the first terminal 210, reserve the service with the operator 250 and purchase the profile corresponding thereto. According to an embodiment, the operator 250 may make a request for preparing the profile to the profile server 230 by using a function of ES2+.DownloadOrder and a function of ES2+.ConfirmOrder. According to an embodiment, the operator 250 may selectively include a confirmation code for downloading the profile in the profile preparation request. Further, according to an embodiment, the operator 250 may further selectively include a confirmation code for moving a profile that can be used when the profile moves in the future, that is, a profile movement confirmation code (confirmation code or confirmation code for device change) in the profile preparation request. The confirmation code for downloading the profile and the profile movement confirmation code may be character string or an alphanumeric string including one or more numbers or characters. According to an embodiment, the confirmation code for downloading the profile and the profile movement confirmation code may be the same as or different from each other, and the operator 250 may reuse the confirmation code for downloading the profile without the profile movement confirmation code, so as to make a request for configuring the profile movement confirmation code to have a value that is the same as the confirmation code for downloading the profile. According to an embodiment of the disclosure, the profile movement confirmation code and the confirmation code for downloading the profile may be interchangeably used. According to an embodiment, when simply the confirmation code is used, the confirmation code may refer to the profile movement confirmation code or the confirmation code for downloading the profile. In this case, whether the confirmation code indicates the profile movement confirmation code or the confirmation code for downloading the profile may be determined according to the overall flow of relevant operation.

In operation 3001, the profile server 230 may prepare the profile to be transferred to the first terminal 210. The profile server 230 or the operator 250 may assign and manage a matching ID corresponding to the prepared profile. When the operator 250 includes the confirmation code for downloading the profile or the profile movement confirmation code in the profile preparation request, the profile server 230 may store the corresponding confirmation code to correspond to the prepared profile. When storing the corresponding confirmation code, the profile server 230 may store the corresponding confirmation code without any change or selective generate and store a hash value of the confirmation code. The hash may use algorithms such as secure hash algorithm (SHA)-0, SHA-1, and SHA-256.

In operation 3001, the profile server 230 or the operator 250 may generate an activation code for downloading the profile and transfer the activation code to the user 200. The activation code may include at least one of a FQDN of an address of the profile server 230 which prepared the profile, a matching ID corresponding to the prepared profile, a profile download confirmation code required indicator (confirmation code required flag), and a profile movement confirmation code required indicator (confirmation code for device change required flag). According to an embodiment, the profile download confirmation code required indicator and the profile movement confirmation code required indicator may be interchangeably used. Further, according to an embodiment, the profile download confirmation code required indicator may be used as the profile movement confirmation code required indicator. According to an embodiment, the profile download confirmation code required indicator and the profile movement confirmation code required indicator may be indicated using the same flag (for example, profile download confirmation code required indicator of confirmation code indicator (confirmation code required flag)). When the profile download confirmation code is included in the profile preparation request of the operator 250, the profile download confirmation code required indicator may be configured as "1" or "True". Further, when the profile movement confirmation code is included in the profile preparation request of the operator 250, the profile movement confirmation code required indicator may be configured as "1" or "True".

In operation 3001, according to an embodiment, the profile server 230 may selectively register an event corresponding to the prepared profile in a subscription relay server (not shown) which the first terminal 210 can access. Events registered in the subscription relay server (not shown) may include at least one of the FQDN of the address of the profile server 230 which prepared the profile and the matching ID (or event ID) of the prepared profile.

In operation 3003, the first terminal 210 may download the profile prepared by the profile server 230 by using the activation code provided by the profile server 230 or the operator 250 or the event acquired from the subscription relay server (not shown) and install the profile to an eSIM (now shown) (corresponding to reference numeral 211 of FIG. 2) of the first terminal 210.

In operation 3005, the user 200 may make a request for transferring the first profile to the first terminal 210. To this end, the user 200 may identify information on the first profile (profile metadata) and information that the user who moves the first profile should know through the first terminal 210. The information on the first profile and the information that the user who moves the first profile should know may be stored in the first terminal 210 or the first profile.

The information on the first profile may include, for example, a name or logo of the operator 250 and a profile policy. The information that the user who moves the first profile should know may include, for example, the remaining number of movements of the profile allowed by the user 250 or the cost paid for movements of the profile by the user . According to an embodiment, the first profile information may include the content that acquisition of information on the second terminal 220 to move the profile is required. The information on the second terminal 220 may selectively include at least one of an ID of the eUICC installed in the second terminal 220, a type allocation code (TAC) of the second terminal 220, and information on a subscription relay server (not shown) supported by the second terminal 220, and the information on the subscription relay server supported by the second terminal 220 may include FQDNs of addresses of one or more subscription relay servers and an indicator indicating whether the corresponding subscription relay server supports a push notification. Further, the first profile may store at least one of an address of the profile server that the terminal should access for profile movement. The profile server that the terminal should access for profile movement may be, for example, the profile server 230. Further, the first profile may include a profile movement confirmation code required indicator (confirmation code for device change required flag) indicating whether provision of the profile movement confirmation code is needed to the profile server 230 during a profile movement request process, and when provision of the profile movement confirmation code to the profile server 230 is needed, the corresponding indicator may be configured as "True" or NULL.

In operation 3007, the first terminal 210 may make a request for moving the first profile to the profile server 230. Operation 3007 may be performed by using, for example, at least one of an initiate authentication message, an authenticate client message, and a transfer request message, and/or by further transmitting an operation type configured as a device change or a transfer profile. In operation 3007, a procedure of making a request for moving the first profile may include an operation of transmitting at least a profile ID (ICCID) of the first profile. Further, the procedure of making a request for moving the first profile may selectively include at least one of an ID of the eUICC installed in the second terminal 220, a type allocation code (TAC) of the second terminal 220, and information on a subscription relay server (not shown) supported by the second terminal 220.

In operation 3009, the profile server 230 and the operator 250 may identify possibility of movement of the first profile. For example, operation 3009 may be performed using a profile movement confirmation request message (confirm device change request) through which the profile server 230 makes a request for confirming whether the profile requested by the first terminal 210 can move to the operator 250. The profile movement confirmation request message may selectively include at least one of the profile ID of the requested first profile, the ID of the eUICC installed in the second terminal 220, and the type allocation code (TAC) of the second terminal 220.

In operation 3009, the operator 250 receiving the profile movement confirmation request message from the profile server 230 may identify the requested profile by using the profile ID and determine whether the corresponding profile can move. Further, when the profile moves to the second terminal 220, it may be determined whether the profile server 230 may reuse a profile that is the same as the first profile or a new profile should be prepared and the result may be returned to the profile server 230.

When the corresponding profile moves, it may be determined whether reception of the profile movement confirmation code (or confirmation code) from the first terminal 210 is needed, and when reception of the corresponding code is needed, the profile movement code required indicator may be returned to the profile server 230. In addition, a new profile movement confirmation code may be generated in response to the current profile movement request, and the corresponding generated profile movement confirmation code may be returned to the profile server 230.

When the corresponding profile moves, it may be determined whether reception of the profile movement confirmation code (or confirmation code) from the first terminal 210 is needed, and when reception of the corresponding code is needed, a new profile movement confirmation code may be generated in response to the current profile movement request and the corresponding generated profile movement confirmation code may be returned to the profile server 230. At this time, the profile movement confirmation code required indicator may not be transmitted.

The profile server 230 may store the corresponding confirmation code transmitted from the operator 250. When storing the corresponding confirmation code, the profile server 230 may store the corresponding confirmation code without any change or selectively generate and store a hash value of the confirmation code. The hash may use algorithms such as secure hash algorithm (SHA)-0, SHA-1, and SHA-256. Further, the profile server 230 may store the corresponding confirmation code to correspond to at least one of a session identifier (TransactionID) or a first profile ID. The operator 250 may transfer the generated profile movement confirmation code to the user 200 through an email, a text message, or a call. When deletion of the first profile from the profile server 230 is needed before a second profile for the second terminal 220 to be prepared for movement of the first profile is transferred to the second terminal 220, the operator 250 may return a first profile deletion indicator (delete old profile) to the profile server 230. Further, the operator 250 may transfer information that the user to move the first profile should know to the profile server 250.

In operation 3009, possibility of movement of the first profile may be determined by the profile server 230 itself without interworking with the operator 250. In this case, the operator 250 may provide the profile server 230 with a configuration for movement of the first profile before operation 3001 or 3007, and the profile server 230 may store the same. The profile server 230 may identify the requested profile by using the profile ID and determine whether the corresponding profile can move. Further, when the profile moves to the second terminal 220, it may be determined whether the profile server 230 may reuse a profile that is the same as the first profile or a new profile should be prepared. When the corresponding profile moves, it may be determined whether reception of the profile movement confirmation code from the first terminal 210 is needed. In addition, a new profile movement confirmation code may be generated in response to the current profile movement request, and a value which was prepared by the operator 250 or a value which is the same as the profile download confirmation code used for the existing profile download may be used. The profile server 230 may transfer the profile movement confirmation code to the user 200 through an email, a text message, or a call as necessary. Further, it may be determined whether deletion of the first profile from the profile server 230 is needed before the second profile for the second terminal 220 to be prepared for movement of the first profile is transferred to the second terminal 220.

In operation 3011, the profile server 230 may return the result of the profile movement request to the first terminal 210 according to the result of operation 3009. For example, at least one of an authentication client message or a transfer response message may be used. The profile movement request result may include a message including the profile movement confirmation code required indicator (confirmation code for device change required flag) configured as "True" or NULL indicating that transmission of the profile movement confirmation code to the profile server 230 is needed when the current profile moves and information that the user to move the first profile should notice.

In operation 3013, the first terminal 210 may receive an input of confirmation for movement of the first profile or the profile movement confirmation code from the user 200. When the information on the first profile stored in the first terminal 210 or the first profile includes the profile movement confirmation code required indicator (confirmation code for device change required flag) configured as "True" or NULL, the first terminal 210 may receive an input of the profile movement confirmation code. Further, in operation 3011, when the profile movement confirmation code required indicator (configuration code for device change required flag) configured as "True" or NULL is included in the profile movement request result returned from the profile server 230, the input of the profile movement confirmation code may be received.

In operation 3013, the first terminal 210 may selectively generate a hash value of the input profile movement confirmation code. The hash may use algorithms such as secure hash algorithm (SHA)-0, SHA-1, and SHA-256. Further, when generating the hash value of the profile movement confirmation code, the first terminal 210 may selectively include and generate at least one of the following values along with the profile movement confirmation code or the hash value of the profile movement confirmation code.
- First profile movement confirmation result (for example, permission or rejection of the user 200)
- Session identifier (TransactionID)

The first profile movement confirmation result may be expressed by an integer, for example, 1=permission, 2-rejection, and 3=timeout.

In operation 3013, the first terminal 210 may generate a digital signature of an eSIM (not shown) in the hash value of the event registration notification ID through the SIM (not shown) (corresponding to reference numeral 212 of FIG. 2) of the terminal.

In operation 3015, the first terminal 210 may return the first profile movement confirmation result to the profile server 230. The first profile movement confirmation result may include at least one of the generated digital signature of the eSIM and the session identifier that have been generated including at least one of the first profile movement confirmation result, the profile movement confirmation code, the hash value of the profile movement confirmation code, and the profile movement confirmation code hash value.

In operation 3015, the profile server 230 may verify the first profile movement confirmation result received from the first terminal 210. When the profile movement confirmation code required indicator (confirmation code for device change required flag) configured as "True" or NULL was included in the information on the profile or the profile server 230 returned the profile movement confirmation code required indicator (confirmation code for device change required flag) configured as "True" or NULL as the profile movement request result during a previous operation, the profile server 230 may compare and verify the profile movement confirmation code or the hash value of the profile movement confirmation code returned by the first terminal with the profile movement confirmation code corresponding to the current profile movement request stored in the profile server 230. When the hash value of the profile movement confirmation code is verified, the profile server 230 may generate the hash value of the profile movement confirmation code corresponding to the current profile movement request. The hash may use algorithms such as secure hash algorithm (SHA)-0, SHA-1, and SHA-256. Further, when the stored hash value of the profile movement confirmation code is generated, at least one of the following values may be selectively included and generated along with the stored profile movement confirmation code or the hash value of the stored profile movement confirmation code.
- First profile movement confirmation result transferred by the first terminal 210 (for example, permission or rejection of the user 200)
- Session identifier (TransactionID)

The profile server 230 may compare the hash value of the profile movement confirmation code received from the first terminal 210 with the hash value of the profile movement confirmation code generated by the profile server 230 and, when the has values are the same, prepare the second profile for the second terminal 220.

In operation 3015, the profile server 230 may prepare the second profile to be transferred to the second terminal 220. Operation 3015 may be performed using, for example, at least one of a download order message, a confirm order message, an rpm order message, a release order message, and a handle notification. Further, the profile server 230 may register an event corresponding to the prepared profile in a subscription relay server (not shown) which the second terminal 220 can access. The profile server 230 may store the second profile and a profile download confirmation code corresponding thereto and a hash value of the profile download confirmation code. The confirmation code may be stored when the operator 250 indicates the use of the confirmation code in operation 3001 or 3009. The confirmation code may be the same as the confirmation code provided by the operator 250 in operation 3001 or 3009.

In operation 3017, the profile server 230 may return the first profile movement request result to the first terminal 210. The first profile movement request result may include information for downloading the second profile. The information for downloading the second profile may selectively include at least one of an activation code (AC) corresponding to the second profile, a profile deletion indicator (delete profile flag), an indicator indicating whether to register an event (event registration flag), and a confirmation code required indicator (confirmation code required flag).

In operation 3017, the activation code may include an FQDN of an address of the profile server 230 storing the second profile and an event ID (MatchingID) connected to the second profile. Further, the profile server 230 may include an FQDN of an address of the subscription relay server 270 in which the event has been completely registered in the activation code. In operation 3017, when the event is registered in one or more subscription relay servers (not shown), the profile server 230 may include FQDNs of addresses of the one or more subscription relay servers or select and include an FQDN of an address of one subscription relay server in the activation code.

In operation 3019, the first terminal 210 may inform the user 200 or the second terminal 220 that the second profile can be downloaded. For example, the first terminal 210 may transfer the activation code transmitted in operation 3017 to the second terminal 220. In an example in which the first terminal 210 transfers the activation code to the second terminal 220, the first terminal 210 may convert the activation code into a format of an image such as a QR code or a format of a character string, output the converted activation code to the screen, and notify the user 200 that the activation code has been prepared. The user 200 may input the activation code output to the screen of the first terminal 210 into the second terminal 220.

For example, in operation 3019, the first terminal 210 may output information indicating that the second profile has been prepared to the screen or directly transfer the result to the second terminal 220 through a wired connection, Wi-Fi, Bluetooth, or NFC.

In operation 3021, the second terminal 220 may transmit a message making a request for downloading the profile to the profile server 230. For example, the profile download request in operation 3021 may use a terminal authentication request message (authenticate client request) including at least one of the identifier of the eUICC (eUICC ID or EID) within the second terminal 220 and matching identifier corresponding to the prepared profile. In operation 3021, the profile server 230 may provide the second terminal 220 with the second profile corresponding to the matching identifier or the identifier of the eUICC. For example, operation 3021 may further include one or more message exchanges between the second terminal 220 and the profile server 230, and the first message that the profile server 230 sends in reply to the second terminal 220 may be a terminal authentication response message (authenticate client response).

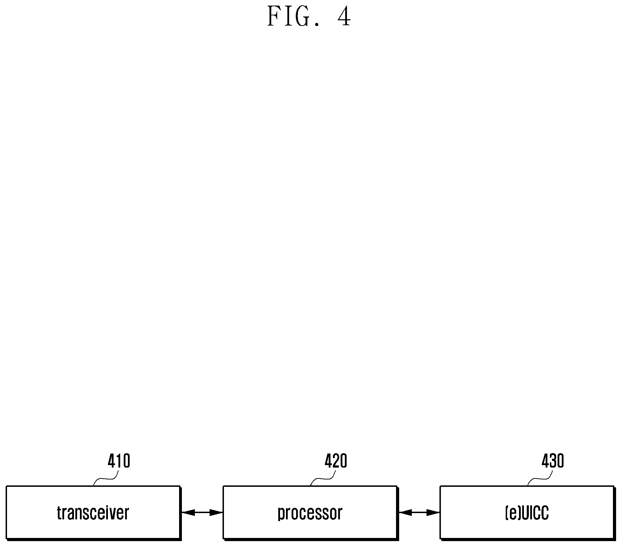

FIG. 4 is a block diagram illustrating elements of a terminal according to an embodiment of the disclosure.

Each of the terminals (the first terminal 210, the second terminal 220, and the terminal mentioned without a reference numeral) described in the disclosure may correspond to the first terminal or the second terminal de7scribed in FIG. 2. The first terminal 210 and the second terminal 220 may be examples of the terminals in FIG. 2, and the expressions "first" and "second" are used only to indicate that respective terminals are physically different terminals.

As illustrated in FIG. 4, the terminal may include a transceiver 410 and a processor 420. Further, the terminal may include a UICC 430. For example, the UICC 430 may be inserted into the terminal or may be an eUICC embedded into the terminal.

The transceiver 410 may transmit and receive signals, information, and data to and from a profile server.

The transceiver 410 according to an embodiment of the disclosure may transmit a message making a request for moving a profile to the profile server, receive a profile movement confirmation code required indicator from the profile server, transmit a profile movement confirmation code to the profile server, receive an activation code, whether an event is registered in a subscription relay server, and whether deletion of the profile is needed from the profile server, and transmit a profile deletion result to the profile server.

The transceiver 410 according to an embodiment of the disclosure may transmit a message making a request for the profile to the profile server by using the activation code and receive a profile package.

Meanwhile, the processor 420 is an element for overall controlling the terminal. The processor 520 may control the overall operation of the terminal according to various embodiments of the disclosure. The processor 420 may be named a controller. According to an embodiment of the disclosure, the processor 420 may include at least one processor.

The processor 420 according to an embodiment of the disclosure may control the terminal to receive an input of a profile movement request from a user, identify profile movement information, transmit a message making a request for moving a profile to the profile server, receive a profile movement confirmation code required indicator from the profile server, transmit a profile movement confirmation code to the profile server, receive an activation code, or whether an event is registered in a subscription relay server and whether deletion of the profile is needed from the profile server, delete the profile, transmit a profile deletion result to the profile server, and transmit the activation code or profile movement preparation completion to another terminal.

The processor 420 according to an embodiment of the disclosure may control the terminal to receive the activation code from the other terminal, transmit a message making a request for the profile to the profile server by using the activation code, receive a profile package from the profile server, and install the profile package.

The UICC 430 according to an embodiment of the disclosure may download and install the profile. Further, the UICC 430 may manage the profile.

The UICC 430 may operate according to the control of the processor 420. Alternatively, the UICC 430 may include a processor or a controller for installing the profile or may have an application installed therein. A portion of the application may be installed in the processor 420.

Meanwhile, the terminal may further include a storage unit (not shown) and may store data such as a basic program for the operation of the terminal, an application program, and configuration information. Further, the storage unit may include at least one type of storage medium of a flash memory type, a hard disk type, a multimedia card micro type, a card type memory (for example, an SD memory, an XD memory or the like), a magnetic memory, a magnetic disk, an optical disk, a random access memory (RAM), a static RAM (SRAM), a read-only memory (ROM), a programmable read-only memory (PROM), and an electrically erasable programmable ROM (EEPROM). The processor 520 may perform various operations by using various programs, content, and data stored in the storage unit.

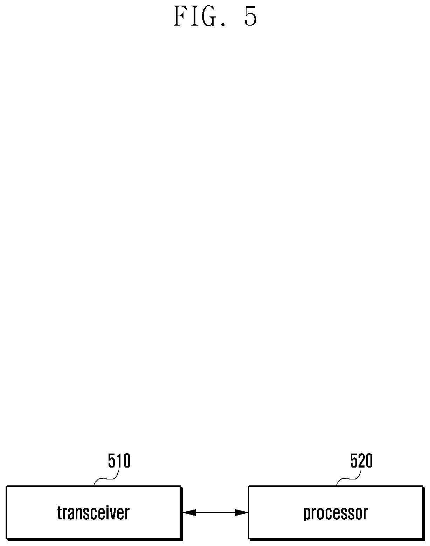

FIG. 5 is a block diagram illustrating elements of a profile server according to an embodiment of the disclosure.

Each of the profile servers (the first profile server 230, the second profile server 240, and the server mentioned without a reference numeral) described in the disclosure may correspond to the profile server described in FIG. 2. The first profile server 230 and the second profile server 240 may be embodiments of the servers of FIG. 2, and the expressions "first" and "second" are used only to indicate that the respective profile servers are physically different profile servers.

Referring to FIG. 5, the profile server may include a transceiver 510 and a processor 520.

The transceiver 510 may transmit and receive signals, information, and data to and from a terminal, a subscription relay server, or an operator.

The transceiver 510 according to an embodiment of the disclosure may receive a profile movement request message from a terminal, transmit a profile movement confirmation code required indicator to the terminal, receive a profile movement confirmation code from the terminal, transmit a message including an activation code and whether deletion of a profile is needed to the terminal, receive a profile deletion message from the terminal, receive a profile download request message from the terminal, transmit a profile package to the terminal when the profile can be downloaded, and transmit an error code to the terminal when the profile cannot be downloaded.

Meanwhile, the processor 520 is an element for overall controlling the profile server. The processor 520 may control the overall operation of the profile server according to various embodiments of the disclosure. The processor 520 may be named a controller. According to an embodiment of the disclosure, the processor 520 may include at least one processor.

The processor 520 according to an embodiment of the disclosure may control the profile server to receive a profile movement request message from a terminal, determine whether a profile can move, transmit a profile movement confirmation code required indicator to a terminal, receive a profile movement confirmation code from the terminal, prepare a profile for movement of the existing profile, generate an activation code for downloading the profile, configure a state of the prepared profile as a state in which download is not possible when deletion of the existing profile is needed, transmit a message including the activation code and whether deletion of the profile is needed to the terminal, receive a profile deletion result from the terminal, change the profile to a state in which download is possible, receive a profile download request message from the terminal, determine whether the profile can be downloaded, transmit a profile package to the terminal when the profile can be downloaded, and transmit an error code to the terminal when the profile cannot be downloaded.

Meanwhile, the profile server may further include a storage unit (not shown), and may store data such as a basic program for the operation of the profile server, an application program, and configuration information. Further, the storage unit may include at least one type of storage medium of a flash memory type, a hard disk type, a multimedia card micro type, a card type memory (for example, an SD memory, an XD memory or the like), a magnetic memory, a magnetic disk, an optical disk, a random access memory (RAM), a static RAM (SRAM), a read-only memory (ROM), a programmable read-only memory (PROM), and an electrically erasable programmable ROM (EEPROM). The processor 520 may perform various operations by using various programs, content, and data stored in the storage unit.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular expression may include a plural expression unless they are definitely different in a context. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such expressions as "a first", "a second", "the first", and "the second" may modify corresponding elements regardless of the order or importance thereof, and may be used to simply distinguish a corresponding element from the other elements and does not limit the corresponding elements. When an element (e.g., a first element) is referred to, with or without the term "operatively" or "communicatively", as "coupled with/to" or "connected with /to" another element (e.g., a second element), the element may be coupled/connected with/to the other element directly or via another element (e.g., a third element).

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments of the disclosure may be implemented as software (e.g., a program) including instructions that are stored in a storage medium (e.g., an internal memory or external memory) that is readable by a machine (e.g., a computer). The machine is a device that can invoke the stored instructions from the storage medium and operate according to the invoked instructions, and may include terminals according to various embodiments of the disclosure (e.g., the first terminal 210 and the second terminal 220). When the instructions are executed by a processor (e.g., the processor 520 in FIG. 9 or the processor 620 in FIG. 10), the processor may perform functions corresponding to the instructions, with or without using other components under the control of the processor. The instructions may include a code generated or executed by a complier or a code executable by an interpreter.

The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store ^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each element (e.g., a module or a program) according to various embodiments may include a single entity or multiple entities, some the above-described sub elements may be omitted, or other sub elements may be additionally included in various embodiments. Alternatively or additionally, some elements (e.g., modules or programs) may be integrated into a single entity. In such a case, the integrated entity may still perform the functions, which have been performed by each of the corresponding elements before the integration, in the same or similar manner. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method performed by a first terminal in a wireless communication system supporting a device change, the method comprising:
transmitting a device change request message for a device change for a profile of the first terminal to a profile server;
receiving a device change request response message comprising a confirmation code required indicator for the device change from the profile server;
identifying reception of an input of a confirmation code, based on the confirmation code required indicator for the device change;
generating confirmation code hash information, based on the confirmation code; and
transmitting a device change confirmation message comprising the confirmation code hash information to the profile server.

2. The method of claim 1, further comprising:
receiving a device change confirmation response message comprising one or more of an activation code or profile deletion information from the profile server; and
providing a second terminal with the activation code for the device change.

3. The method of claim 1, wherein the device change request message comprises at least one of a profile identifier for the device change (integrated circuit card ID (ICCID)), an identifier of an eUICC installed in a second terminal (embedded universal integrated circuit card ID (EID), or a type allocation code (TAC) of the second terminal, and
wherein the confirmation code hash information is generated including a session identifier.

4. A method performed by a profile server in a wireless communication system supporting a device change, the method comprising:
receiving a device change request message for a device change for a profile of a first terminal from the first terminal;
receiving a confirmation code from a service provider;
transmitting a device change request response message comprising a confirmation code required indicator for the device change to the first terminal, based on the confirmation code;
receiving a device change confirmation message comprising confirmation code hash information from the first terminal; and
determining a result of a device change request, based on the received confirmation code hash information.

5. The method of claim 4, wherein the result of the device change request is determined based on comparison between the confirmation code hash information received from the first terminal and stored confirmation code hash information.

6. The method of claim 5, further comprising, in case that it is determined that the confirmation code hash information received from the first terminal corresponds to the stored confirmation code hash information:
transmitting a device change confirmation response message comprising at least one of an activation code or profile deletion information to the first terminal; and
receiving a profile download request message transmitted from a second terminal, based on the activation code for the device change.

7. The method of claim 4, further comprising receiving, from the service provider, a service provision message comprising information on whether a new profile for the device change is needed.

8. The method of claim 4, further comprising transmitting a second device change confirmation message to the service provider,
wherein the device change request message comprises at least one of a profile identifier (integrated circuit card ID (ICCID), an identifier of an eUICC installed in a second terminal (embedded universal integrated circuit card ID (EID), or a type allocation code (TAC) of the second terminal, and
wherein the second device change confirmation message comprises at least one of the profile identifier, the identifier of the eUICC installed in the second terminal, or the TAC of the second terminal.

9. A first terminal in a wireless communication system supporting a device change, the first terminal comprising:
a transceiver configured to transmit and receive signals; and
a controller connected to the transceiver,
wherein the controller is configured to transmit a device change request message for a device change for a profile of the first terminal to a profile server, receive a device change request response message comprising a confirmation code required indicator for the device change from the profile server, identify reception of an input of a confirmation code, based on the confirmation code required indicator for the device change, generate confirmation code hash information, based on the confirmation code, and transmit a device change confirmation message comprising the confirmation code hash information to the profile server.

10. The first terminal of claim 9, wherein the controller is further configured to receive a device change confirmation response message comprising one or more of an activation code or profile deletion information from the profile server and provide a second terminal with the activation code for the device change.

11. The first terminal of claim 9, wherein the device change request message comprises at least one of a profile identifier for the device change (integrated circuit card ID (ICCID)), an identifier of an eUICC installed in a second terminal (embedded universal integrated circuit card ID (EID), or a type allocation code (TAC) of the second terminal, and
wherein the confirmation code hash information is generated including a session identifier.

12. A profile server in a wireless communication system supporting a device change, the profile server comprising:
a transceiver configured to transmit and receive signals; and
a controller connected to the transceiver,
wherein the controller is configured to receive a device change request message for a device change for a profile of a first terminal from the first terminal, receive a confirmation code from a service provider, transmit a device change request response message comprising a confirmation code required indicator for the device change to the first terminal, based on the confirmation code, receive a device change confirmation message comprising confirmation code hash information from the first terminal, and determine a result of a device change request, based on the received confirmation code hash information.

13. The profile server of claim 12, wherein the controller is configured to, in case that it is determined that the confirmation code hash information received from the first terminal corresponds to the stored confirmation code hash information, transmit a device change confirmation response message comprising at least one of an activation code or profile deletion information to the first terminal and receive a profile download request message transmitted from a second terminal, based on the activation code for the device change, and
wherein the result of the device change request is determined based on comparison between the confirmation code hash information received from the first terminal and stored confirmation code hash information.

14. The profile server of claim 12, wherein the controller is configured to receive a service provision message comprising information on whether a new profile for the device change is needed from the service provider.

15. The profile server of claim 12, wherein the controller is configured to transmit a second device change confirmation message to the service provider,
wherein the device change request message comprises at least one of a profile identifier (integrated circuit card ID (ICCID), an identifier of an eUICC installed in a second terminal (embedded universal integrated circuit card ID (EID), or a type allocation code (TAC) of the second terminal, and
wherein the second device change confirmation message comprises at least one of the profile identifier, the identifier of the eUICC installed in the second terminal, or the TAC of the second terminal.
